(19) Europäisches Patentamt
European Patent Office
Office européen des brevets

(11) **EP 2 362 633 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(51) Int Cl.:
***H04N 1/60*** *(2006.01)*

(21) Anmeldenummer: **11001027.9**

(22) Anmeldetag: **09.02.2011**

(54) **Verfahren zur Bestimmung von Charakterisierungsdaten eines Druckprozesses**

Method for determining print process characterisation data

Procédé de détermination de données de caractérisation d'un processus d'impression

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2010 DE 102010007858**

(43) Veröffentlichungstag der Anmeldung:
**31.08.2011 Patentblatt 2011/35**

(73) Patentinhaber: **Heidelberger Druckmaschinen Aktiengesellschaft**
**69115 Heidelberg (DE)**

(72) Erfinder: **Bestmann, Günter, Dr.**
**24161 Altenholz (DE)**

(56) Entgegenhaltungen:
**EP-A1- 1 146 726        WO-A1-2005/013188**
**US-A1- 2001 038 459        US-A1- 2005 238 374**

• **ZUFFI S ET AL: "SPECTRAL-BASED PRINTER MODELING AND CHARACTERIZATION", JOURNAL OF ELECTRONIC IMAGING, SPIE / IS & T, Bd. 14, Nr. 2, 1. April 2005 (2005-04-01), Seiten 23008-01, XP001237093, ISSN: 1017-9909, DOI: 10.1117/1.1900137**

**Beschreibung**

Die Erfindung bezieht sich auf das Gebiet der elektronischen Reproduktionstechnik und betrifft ein Verfahren zur Bestimmung von Charakterisierungsdaten zur Verwendung in einem Druckprozess, wobei zunächst wenigstens ein Testelement mit einer Anzahl von Farbfeldern auf einen Bedruckstoff gedruckt wird, den Farbfeldern Tonwerte von wenigstens einer Druckfarbe zugeordnet sind, die Farbfelder des wenigstens einen Testelements mit einem Messgerät zur Ermittlung von Messergebnissen spektral vermessen werden und die Messergebnisse als spektrale Ist-Daten abgespeichert werden.

In der Reproduktionstechnik werden Druckvorlagen für Druckseiten erzeugt, die alle zu druckenden Elemente wie Texte, Grafiken und Bilder enthalten. Für den farbigen Druck wird für jede Druckfarbe eine separate Druckvorlage erzeugt, die alle Elemente enthält, die in der jeweiligen Farbe gedruckt werden. Beim Vierfarbdruck sind das die Druckfarben Cyan (C), Magenta (M), Gelb (Y) und Schwarz (K). Die nach Druckfarben separierten Druckvorlagen werden auch Farbauszüge genannt. Die Druckvorlagen werden in der Regel gerastert und mit einem Belichter auf Filme belichtet, mit denen dann Druckplatten für das Drucken hoher Auflagen hergestellt werden. Alternativ können die Druckvorlagen in speziellen Belichtungsgeräten auch gleich auf Druckplatten belichtet werden oder sie werden direkt als digitale Daten an eine digitale Druckmaschine übergeben. Dort werden die Druckvorlagendaten dann beispielsweise mit einer in die Druckmaschine integrierten Belichtungseinheit auf Druckplatten belichtet, bevor unmittelbar anschließend der Auflagendruck beginnt. Es gibt auch digitale Druckmaschinen, die keine Druckplatten benötigen, weil sie z.B. nach dem elektrofotografischen Druckprinzip oder mit Tintenstrahldruck arbeiten.

Nach dem heutigen Stand der Technik werden die Druckvorlagen elektronisch reproduziert. Dabei werden Bilder in einem Farbscanner gescannt und in Form von digitalen Daten gespeichert. Texte werden mit Textverarbeitungsprogrammen erzeugt und Grafiken mit Zeichenprogrammen. Mit einem Layoutprogramm werden die Bild-, Text- und Grafik-Elemente zu einer Druckseite zusammengestellt. Die Daten mehrerer Druckseiten werden mit den Daten weiterer Elemente, wie Passkreuzen, Schnittmarken und Falzmarken sowie Druckkontrollfeldern, zu Druckvorlagen für einen Druckbogen zusammengefasst. Als Datenformate zur Beschreibung der Druckvorlagen werden heute weitgehend die Seitenbeschreibungssprachen PostScript und PDF (Portable Document Format) verwendet. Die PostScript- bzw. PDF-Daten werden vor der Aufzeichnung der Druckvorlagen in einem Raster-Image-Prozessor (RIP) in einem ersten Schritt in Farbauszugswerte für die Farbauszüge C, M, Y und K umgerechnet. Dabei entstehen für jeden Bildpunkt vier Farbauszugswerte als Tonwerte im Wertebereich von 0 bis 100%. Die Farbauszugswerte sind ein Maß für die Farbdichten, mit denen die vier Druckfarben Cyan, Magenta, Gelb und Schwarz auf dem Bedruckstoff gedruckt werden. In Sonderfällen, in denen mit mehr als vier Farben gedruckt wird, ist jeder Bildpunkt durch so viele Farbauszugswerte beschrieben, wie es Druckfarben gibt. Die Farbauszugswerte können z.B. mit 8 Bit je Bildpunkt und Druckfarbe als Datenwert gespeichert sein, womit der Wertebereich von 0 % bis 100% in 256 Tonwertstufen unterteilt ist.

Die Farben der Elemente einer Druckseite sind üblicherweise nicht gleich im CMYK-Farbsystem der Druckfarben definiert, sondern in der Regel in einem anderen Farbsystem. So werden die Bilder in einem Scanner durch Farbfilter in die Farbkomponenten Rot, Grün und Blau (RGB) zerlegt, also in die Komponenten eines dreidimensionalen Farbraums. Die Bilddaten müssen daher vor der Aufzeichnung der Druckvorlagen auf Farbauszugsfilme oder auf Druckplatten vom RGB-Farbraum des Scanners in den CMYK-Farbraum des zu verwendenden Druckprozesses transformiert werden. Gleiches gilt für die digital fotografierten Bilder.

Solche Farbraumtransformationen werden in der Reproduktionstechnik benötigt, weil die verwendeten Geräte und Prozesse bestimmte Einschränkungen und Besonderheiten bei der Darstellung und Wiedergabe der Farben haben und diese Eigenschaften bei allen Geräten und Prozessen verschieden sind. Deshalb gibt es für verschiedene Geräte und Prozesse wie Scanner, Monitore, Prüfdruckgeräte, Druckprozesse usw. unterschiedliche Farbräume, die die Farbeigenschaften des Geräts bzw. Prozesses jeweils optimal beschreiben und die als geräteabhängige Farbräume (englisch: device dependent color space) bezeichnet werden. Neben den geräteabhängigen Farbräumen gibt es noch geräteunabhängige Farbräume (englisch: device independent color space), die auf den menschlichen Seheigenschaften eines sogenannten Normalbeobachters basieren. Solche Farbräume sind beispielsweise der von der Standardisierungskommission CIE (Commission Internationale d'Eclairage) definierte CIE 1931 XYZ-Farbraum (kurz XYZ-Farbraum) oder der daraus abgeleitete CIE 1976 L*a*b* Farbraum (kurz Lab-Farbraum), wobei sich der Lab-Farbraum in der Technik stärker durchgesetzt hat. Will man wissen, ob zwei Farben vom menschlichen Auge als gleich oder verschieden empfunden werden, so genügt dazu die Messung der XYZ- bzw. Lab-Farbkomponenten. Die Lab-Farbkomponenten bilden einen dreidimensionalen Farbraum mit einer Helligkeitsachse (L) und zwei Farbachsen (a, b), die man sich in der Ebene eines Farbkreises vorstellen kann, durch dessen Mittelpunkt die Helligkeitsachse verläuft. Die Lab-Farbkomponenten stehen mit den XYZ-Farbkomponenten über nichtlineare Umrechnungsgleichungen in Beziehung.

Ein Gerät bzw. farbverarbeitender Prozess kann bezüglich seiner Farbeigenschaften charakterisiert werden, indem allen möglichen Wertekombinationen des zugehörigen geräteabhängigen Farbraums (Tonwerte) die Lab-Farbkomponenten (Farbwerte) zugeordnet werden, die ein Mensch bei der mit diesen Tonwertkombinationen erzeugten Farben sieht. Für einen Druckprozess erzeugen die verschiedenen CMYK-Tonwertkombinationen jeweils eine andere gedruckte Farbe. Mit einem Farbmessgerät kann man die Lab-Komponenten der gedruckten Farben ermitteln und den CMYK-Tonwertkombinationen zuordnen. Eine solche Zuordnung, die die mit einem Gerät bzw. Prozess erzeugten geräteabhängigen Farben zu einem geräteunabhängigen Farbraum (XYZ oder Lab) in Beziehung setzt, wird auch als Farbprofil bezeichnet, im Fall eines Druckprozesses als Ausgabe-Farbprofil. Die Definition und Datenformate für Farbprofile sind vom ICC (International Color Consortium) standardisiert (Specification ICC.1 2006-05) und von der ISO normiert worden (ISO ISO15076-1:2005). In einem ICC-Farbprofil ist die Zuordnung der Farbräume in beiden Richtungen gespeichert, z.B. die Zuordnung Lab = f1 (CMYK) und die invertierte Zuordnung CMYK = f2 (Lab). Die mit einem Farbprofil festgelegte Zuordnung kann mit Hilfe eines Tabellenspeichers realisiert werden. Wenn z.B. den CMYK-Tonwerten eines Druckprozesses die Lab-Farbwerte zugeordnet werden sollen, muss der Tabellenspeicher für jede mögliche Wertekombination der CMYK-Tonwerte einen Speicherplatz haben, in dem die zugeordneten Lab-Farbwerte gespeichert sind. Dieses einfache Zuordnungsverfahren hat jedoch den Nachteil, dass der Tabellenspeicher sehr groß werden kann. Wenn jede der CMYK- Tonwerten 256 Dichtestufen hat, gibt es $256^4$ = 4.294.967.296 mögliche Wertekombinationen der CMYK-Tonwerte. Der Tabellenspeicher muss also 4.294.967.296 Speicherzellen mit je 3 Byte oder 6 Byte Wortlänge (je ein Byte oder zwei Byte für L, a, b) haben. Um die Größe des Tabellenspeichers zu reduzieren, wird deshalb eine Kombination von Tabellenspeicher und Interpolationsverfahren zur Beschreibung eines Farbprofils und zur Realisierung einer entsprechenden Farbraumtransformation eingesetzt. In dem Tabellenspeicher sind nur die zugeordneten Lab-Komponenten für ein gröberes, regelmäßiges Gitter von Stützstellen im CMYK-Farbraum gespeichert. Für CMYK- Tonwerte, die zwischen den Gitterpunkten liegen, werden die zuzuordnenden Lab-Farbwerte aus den gespeicherten Lab-Farbwerten der benachbarten Stützstellen interpoliert.

Bei der Verwendung von Sonderfarben- oder Mehrfarbensystemen wie Hexachrome ® der Firma Pantone werden die druckbaren Tonwerte im Unterschied zu den CMYK-Kombinationen durch eine Anzahl weiterer Druckfarben aufgebaut, so dass die ICC-Farbprofile entsprechend umfangreicher werden.

Wie beschrieben werden zur Farbseparation spezielle Drucktabellen (ICC-Farbprofile) verwendet, in denen zusätzlich prozessbedingte Randbedingungen wie zum Beispiel der Farbaufbau (Flächendeckungssumme, maximales Schwarz, Schwarzaufbau) und die Abbildung nichtdruckbarer Farbwerte (Gamut Mapping) eingearbeitet sind. Während Drucktabellen für CMYK-Systeme mit den konventionellen farbmetrischen Methoden gut berechnet werden können, wird dies für Systeme mit Sonderfarben und Mehrfarbensysteme leicht unhandlich und aufwendig.

Die Drucktabellen werden dabei aus den Charakterisierungsdaten eines Druckprozesses berechnet. Charakterisierungsdaten sind die Festlegung einer eindeutigen Beziehung zwischen digitalen Tonwerten und gemessenen Farbwerten im Druck (Tonwerte CMYK / Farbwerte CIEXYZ oder CIELAB). Insbesondere können hierbei die gemessenen Farbwerte als Spektren hinterlegt sein. Die Charakterisierungsdaten könne auch zur Prozesskontrolle und Prozesskalibrierung herangezogen werden.

Ermittelt werden die Charakterisierungsdaten für CMYK-Systeme im Stand der Technik unter Verwendung eines Testelements entsprechend ISO 12642-2:2006 oder unter Verwendung entsprechender herstellerspezifischer Testelemente, dieses ist insbesondere für Mehrfarben-Systeme notwendig.

So ist es beispielsweise aus der DE 10 2004 001 937 A1 bekannt, zur Ermittlung eines ICC-Farbprofils vier Testformen zu erstellen, aus diesen Testformen jeweils Charakterisierungsdaten zu gewinnen, um dann entsprechende Tabellenspeicher zu erstellen, welche die Zuordnung der Farbwerte aus dem geräteunabhängigen Farbraum in den Druckfarbraum beschreiben. Die Verwendung von vier Testformen wird hier der Tatsache geschuldet, dass Sonderfarben durch die Verwendung von Sekundärdruckfarben ersetzt werden sollen. Weiterhin werden hier beispielhaft Matrixoperationen vorgeschlagen, um nicht lineare Veränderungen der Tonwertestufen zu berücksichtigen, d.h. es werden zusätzlich Gradationskorrekturen, z.B. in Abhängigkeit von Tonwertzunahmen der einzelnen Druckpunkte berücksichtigt.

Aus der Offenlegung WO 2005/013188A1 geht ein Modell zur Kalibrierung und zur Steuerung von Druckern hervor. Das Modell basiert auf spektralen Farbwerten in Rastertönen, wobei die Spektren der Reflexionswerte eine Funktion der Flächenbedeckung sind. Dieser Funktionszusammenhang wird mittels eines Druckkontrollstreifens mit Farbmessfeldern, welche Rastertöne aufweisen, kalibriert. Dabei basiert die Berechnung der Reflexionsspektren aus einer gewichteten Mittelung zwischen zwei Komponenten. Die erste Komponente basiert auf dem Clapper-Yule-Modell und die zweite Komponente auf dem spektralen Neugebauer Modell. Weiterhin ist eine Look-up-Tabelle vorgesehen, welche farbmetrische Werte enthält und zugeordnete Flächenbedeckungen, welche auf Basis des spektralen Modells berechnet werden. Dabei werden nominale Flächenbedeckungen den tatsächlichen Flächenbedeckungen gegenüber gestellt.

Die Aufgabe der vorliegenden Erfindung besteht nun darin, ein Verfahren zur Berechnung von Charakterisierungsdaten eines Druckprozesses vorzustellen, welches handlicher und weniger aufwendig als die bisher bekannten Verfahren ist.

Diese Aufgabe wird durch ein gattungsgemäßes Verfahren gelöst, bei dem z.B. auf einer Testform wenigstens ein Testelement gebildet wird und mittels dieser Testform ein Bedruckstoff in einer Druckmaschine bedruckt wird. Alternativ kann dieses Testelement dabei auch in einem nicht zu verwendenden Bereich der Druckvorlage und der Druckform abgebildet werden. Bei der Druckmaschine kann es sich beispielsweise um eine elektrophotographische, eine Offset-Druckmaschine oder Ähnliches handeln.

Dieses wenigstens eine Testelement kann mit einem Spektralphotometer ausgemessen werden und entsprechende spektrale Messergebnisse können als Messergebnisse ermittelt werden. Diese Messergebnisse können sodann als spektrale Ist-Daten abgespeichert werden.

Auf Basis einer ersten Teilmenge dieser abgespeicherten Ist-Daten kann dann eine erste Tonwertzunahme für die zugeordneten Tonwerte der Farbfelder der ersten Teilmenge bestimmt werden. Alternativ oder zusätzlich kann auch eine Tonwertekurve für diese erste Teilmenge bestimmt werden.

Da diese Tonwertzunahme zunächst einmal für einzelne, bestimmte Tonwerte ermittelt ist, ist es weiter vorgesehen, dass aus diesen ersten Tonwertzunahmen der zugeordneten Tonwerte eine erste Tonwertzunahmekurve oder Tonwertekurve durch Interpolation ermittelt wird. Hierbei ist unter der Tonwertekurve insbesondere eine Kurve zur Darstellung der spektralen Ist-Daten in Abhängigkeit von den vorgegebenen Tonwerten, d.h. insbesondere ein Ist/Soll-Vergleich zu verstehen.

Desweiteren wird wenigstens eine zweite Teilmenge der Ist-Daten zur Bestimmung wenigstens eines Parameters eines Modells zur Berechnung von Farbwerten des Druckprozesses herangezogen. Durch einen Vergleich von berechneten Farbwerten basierend auf dem Modell mit gemessenen Farbwerten, beispielsweise aus der zweiten Teilmenge oder auch aus mehreren Teilmengen des Testelements oder auch von verschiedenen Testelementen kann durch eine iterative Anpassung der Parameter, bei Verringerung der Differenz aus dem Vergleich optimiert werden.

Weiter soll die Tonwertzunahmekurve, bzw. Tonwertkurve aus der ersten Teildatenmenge zur Korrektur der Zuordnung von Tonwerten der Druckfarben zu gedruckten Farbwerten bzw. deren Spektren verwendet werden. Diese Korrekturkurve soll sodann zur Berechnung der entsprechenden Charakterisierungsdaten des Druckprozesses verwendet werden. Zum Beispiel können aus dieser Korrekturkurve Tabellenspeicher erzeugt werden. Insbesondere kann so ein genaueres Modell des Druckprozesses erreicht werden, welches eine ausreichend exakte Berechnung der Charakterisierungsdaten unter Verwendung eines kleineren Testelementes ermöglicht.

Im Gegensatz zu der alleinigen Vorgehensweise zur Ermittlung von Farbprofilen über interpolierte Tonwerte bzw. Tonwertzunahmekurven können hier über das Modell des Druckprozesses auch tatsächlich vorhandene, im Einzelnen nicht unbedingt bekannte physikalische Randbedingungen des Druckprozesses selber bei der Ermittlung der Charakterisierungsdaten berücksichtigt werden. Insbesondere können Tonwertzunahmen nun viel genauer berücksichtigt werden.

Da mittels des verwendeten Modells diese physikalischen Eigenschaften berücksichtigt werden können, ist zur Ermittlung der ersten Tonwertzunahmekurve bzw. Tonwertekurve durch Interpolation nicht mehr notwendigerweise eine besonders große Anzahl von Farbfeldern zu ihrer Ermittlung zugrunde zu legen. Die Anzahl von Farbfeldern innerhalb eines Testelements kann durch dieses Verfahren daher begrenzt werden. Dies gilt ebenso für die Ermittlung der gesamten notwendigen Charakterisierungsdaten.

In einer bevorzugten Ausführungsform der Erfindung ist es vorgesehen, dass als Modell das spektrale Yule-Nielsen Neugebauer-Modell, vorzugsweise das segmentierte spektrale Yule-Nielsen-Neugebauer Modell verwendet wird und mittels wenigstens der ersten oder zweiten Teilmenge ein Faktor n als Parameter zur Modellierung der optischen Punktverbreiterung iterativ bestimmt wird. So kann mittels eines iterativen Verfahrens ein Modell ermittelt werden, welches einen optischen Punktzuwachs beschreibt und eine genauere Zuordnung von Tonwerten zu spektral ermittelten Farbwerten auch in Bereichen, in denen keine entsprechenden Farbfelder gedruckt wurden, ermöglicht.

Erfindungsgemäß ist es vorgesehen, dass aus der ersten Teilmenge der spektralen Ist-Daten densitometrische, farbmetrische oder aber spektrale erste Tonwerte bzw. Tonwertezunahmen berechnet werden. Bei Sonderfarben sollen vorzugsweise spektrale Tonwerte, bzw. Tonwertzunahmen berechnet werden. Insbesondere ist es auch möglich, dass ausschließlich bei den Farbfeldern, welche Farbwerte von Sonderfarben aufweisen, spektrale Tonwerte bzw. Tonwertzunahmen berechnet werden, bei den übrigen Farbfeldern allerdings densitometrische, farbmetrische oder spektrale Tonwerte bzw. Tonwertzunahmen berechnet werden. Insbesondere können aus diesen ermittelten bzw. berechneten Tonwerten bzw. Tonwertzunahmen entsprechende Kurven, beispielsweise durch Interpolation, ermittelt werden. Allgemein werden berechnete spektrale Tonwerte aber bevorzugt.

In einer bevorzugten Ausführungsform der Erfindung ist es vorgesehen, dass es sich bei der ersten Teilmenge um spektrale Ist-Daten handelt, welche von Farbkeilen aufgenommen wurden, welche vorzugsweise aus Farbfeldern bestehen, die ausschließlich durch eine Druckfarbe und bevorzugt auf Tonwerte mit Abständen von 10 % zueinander basieren. Inklusive eines Nullprozentwertes ergibt dieses, beispielsweise für einen Vierfarbdruck, insgesamt 44 Farbfelder. Werden sechs Druckfarben verwendet, so erhöht sich die Anzahl auf 66 Farbfelder, welche zur Ermittlung von ersten Tonwertzunahmekurven oder Tonwertekurven durch Interpolation verwendet werden.

In einer weiteren Entwicklung des Verfahrens ist vorgesehen, dass es sich bei der zweiten Teilmenge um Daten von Farbfeldern handelt, die durch das Übereinanderdrucken von verwendeten Druckfarben gebildet werden. Die hierfür verwendeten Druckfarben werden gemäß Tonwerten gedruckt, die aus einer vorgegebenen Stützstellenauswahl ausgewählt werden. Vorzugsweise soll die Stützstellenauswahl insgesamt k Stützstellen aufweisen. Die einzelnen Farbfelder werden dann gebildet, indem die Druckfarben gemäß jeder möglichen Kombination der Stützstellen übereinander gedruckt werden. Bei der Verwendung von m Druckfarben ergeben sich somit $k^m$ Kombinationen von übereinander gedruckten Druckfarbendeckungen.

Bevorzugt werden die Stützstellen 0 %, 40 % und 100 % zur Auswahl gestellt, wodurch sich für ein Vierfarbprozess insgesamt 81 weitere Farbfelder für die Ermittlung der zweiten Teilmenge der spektralen Daten ergeben. Bei einem Fünffarbprozess ergeben sich dann zusätzlich 243 Farbfelder.

Um die Charakterisierungsdaten eines Vierfarbdruckprozesses zu ermitteln, sind somit insgesamt 44 plus 81 = 125 Farbfelder notwendig, welches wesentlich weniger als die Farbfelder gemäß dem Stand der Technik sind (gemäß ISO 12642-2 werden typischerweise 1617 Farbfelder verwendet).

In einer erfindungsgemäßen Weiterbildung des Verfahrens ist es vorgesehen, dass das wenigstens eine Testelement Farbfelder in Farbkeilen zur Bestimmung der Daten der ersten Teilmenge und Farbfelder zur Bestimmung der Daten der Daten der zweiten Teilmenge aufweist, wobei die Menge der Farbfelder zur Bestimmung der ersten oder zweiten Teilmenge um die Farbfelder reduziert wird, die bereits zur Bestimmung der zweiten oder ersten Teilmenge verwendet wird. Diese Farbfelder sollen dann nur in einer der beiden Mengen gedruckt aber, zur Bestimmung beider Teilmengen herangezogen werden. Alternativ sollen Farbfelder zur Bestimmung der ersten oder zweiten Teilmenge, denen die gleichen Tonwerte zugrunde liegen, sowohl zur Bestimmung der ersten als auch der zweiten Teilmenge herangezogen werden, wobei insbesondere eine Mittelwertbildung für mehrfach bedruckte Farbfelder vorgesehen ist.

Somit kann entweder eine Verringerung der notwendigen Farbfelder im Testelement vorgesehen sein oder aber die Genauigkeit erhöht werden.

Für einen Vierfarbdruckprozess können beispielsweise vier Weißfelder mit 0 Prozent Farbdeckung für die erste Teilmenge gestrichen werden und zur Bestimmung dieses Nullprozentwertes ausschließlich das Weißfeld mit 0 Prozent Flächendeckung für alle übereinander gedruckten Farbkombinationen aus der Farbfeldmenge genommen werden, welche für die Bestimmung der zweiten Teilmenge herangezogen wird. Ebenso können von den Farbfeldern zur Bestimmung der zweiten Teilmenge diejenigen herausgestrichen werden, welche ausschließlich eine Druckfarbe, hier z.B. 40 % und 100 % aufweisen.

Ein minimales Testelement besteht dann aus 40 Farbfeldern zur Bestimmung der ersten Daten und 73 Farbfeldern zur Bestimmung der zweiten Daten, wobei aus der zweiten Farbfeldmenge ein Farbfeld (Weiß) zur Bestimmung der ersten Teilmenge und aus der ersten Farbfeldmenge acht Farbfelder (4 x 40 % und 4 x 100 %) zur Bestimmung der zweiten Teilmenge mit herangezogen werden. Solch ein minimales Testelement besteht dann für einen Vierfarbdruck aus insgesamt 113 Farbfeldern.

Weiterhin ist in einer Weiterbildung vorgesehen, dass die Charakterisierungsdaten abgespeichert werden und wenigstens unter Verwendung dieser Charakterisierungsdaten ein Farbprofil des Druckprozesses erstellt wird, wobei dieses Farbprofil zur Farbsteuerung einer Druckmaschine des Druckprozesses verwendet werden soll.

Desweiteren wird eigenständig Schutz für ein Testelement zur Bestimmung von Charakterisierungsdaten, vorzugsweise zur Verwendung in dem beschriebenen erfindungsgemäßen Verfahren begehrt, welches eine erste Menge von Farbfeldern gemäß eines Farbkeils aufweist, wobei die Farbfelder jeweils mit nur einer Druckfarbe gebildet werden und die zugrunde liegenden Tonwerte einen vorgegebenen Abstand, welcher z.B. 10 % des Tonwertes aufweist, zueinander aufweist.

Desweiteren soll das Testelement eine zweite Menge von Farbfeldern aufweisen, welche durch das Übereinanderdrucken der Druckfarben gebildet werden, wobei die Druckfarben hier gemäß Tonwerten gedruckt werden, welche aus einer vorgegebenen Stützstellenauswahl von k Stützstellen ausgewählt werden. Vorzugsweise können hier drei Stützstellen, z.B. 0 %, 40 %, 100 % vorgegeben werden.

Desweiteren ist das Testelement so aufgebaut, dass die erste Menge von Farbfeldern reduziert wird, indem solche Farbfelder, die bereits in der zweiten Menge enthalten sind, nicht mehr vorgesehen sind und/oder dass Farbfelder in der zweiten Menge, welche bereits in der ersten Menge enthalten sind, nicht mehr verwendet und somit auch nicht mehr gedruckt werden.

In einer bevorzugten Ausführungsform dieses Testelementes ist es vorgesehen, dass aus der ersten Menge der Farbwerte die Farbfelder herausgelassen werden, welche gerade keine Deckung und keine Druckfarbe aufweisen, d.h. eine Deckung von 0 % besitzen und einem Tonwert von 0 % entsprechen und/oder dass aus der zweiten Menge solche Farbfelder ausgelassen werden, welche ausschließlich aus einer Druckfarbe aufgebaut sind. Das heißt z.B. ein Farbfeld der zweiten Menge, in welcher 40 % Magenta aber 0 % jeder weiteren Druckfarbe enthalten sind, nicht mehr zur Verwendung vorgesehen.

Desweiteren wird die Aufgabe der Erfindung durch eine Vorrichtung gelöst, die zur Durchführung des oben beschriebenen Verfahrens geeignet ist, wobei ein entsprechendes Testelement Verwendung findet.

Die Vorrichtung umfasst dabei eine Druckmaschine, welche ausgebildet ist, sodass Bedruckstoffe mit wenigstens einem erfindungsgemäßen Testelement bedruckt werden können und wo weiterhin eine Messeinrichtung bereitgestellt ist, welche durch Ausmessen spektrale Daten von Farbfeldern des Testelements ermitteln kann. Als Messeinrichtung ist hier ein Spektralphotometer vorgesehen.

Die Vorrichtung umfasst weiterhin eine Speichereinrichtung zum Speichern der spektralen Ist-Daten, wobei die Speichereinrichtung insbesondere so ausgeführt ist, dass sie Teildatenmengen der spektralen Daten speichern kann, welche zum Teil unterschiedlichen Farbfeldern bzw. unterschiedlichen Teilbereichen des Testelements zugeordnet sind.

Weiterhin ist eine Tonwertzunahmeberechnungseinrichtung zur Berechnung von Tonwertkurven oder Tonwertezunahmekurven aus einer ersten Teilmenge der gespeicherten spektralen Ist-Daten vorgesehen. Hierunter ist zu verstehen, dass die Tonwertzunahmeberechnungseinrichtung aus den gemessenen Ist-Daten eines ersten Teilbereichs des Testelements Farbwerte oder Spektren bestimmt bzw. ermittelt und diese Farbwerte bzw. Spektren den den einzelnen Farbfeldern zugrunde liegenden Tonwerten zuordnet. Dies ist zum Einen in Form einer direkten Zuordnung der Farben oder in Form einer Tonwertzunahme, welche die Abweichung der gemessenen Farbwerte von vorgesehenen Farbwerten beschreiben, möglich.

Die Vorrichtung umfasst weiter eine weitere Berechnungseinrichtung zur Berechnung von Spektren für Tonwertekombinationen nach einem Modell, insbesondere nach einem Yule-Nielsen-Neugebauer Modell, noch bevorzugter nach einem segmentierten spektralen Yule-Nielsen-Neugebauer Modell. Wobei die Berechnungseinrichtung gemäß diesem Modelles Spektren den Tonwertkombinationen des Druckprozesses zuordnet. Hierbei ermittelt die Berechnungseinrichtung wenigstens einen Parameter des Modells unter Berücksichtigung der Tonwerte bzw. der Tonwertkurve, welche in der Tonwertzunahmeberechnungseinrichtung ermittelt wurde. Hierbei kann es sich insbesondere um den Faktor n der spektralen Yule-Nielsen-Neugebauer Gleichung handeln, welcher den Zuwachs des Tonwertes durch Verbreiterung beschreiben soll. Die Berechnungseinrichtung ermittelt diesen Parameter insbesondere iterativ durch eine Optimierung des Parameters, sodass die aus dem Modell berechneten Tonwerte mit der Tonwertkurve aus der Tonwertzunahmeberechnungseinrichtung möglichst gut übereinstimmen. Hierfür kann die Berechnungseinrichtung insbesondere ein Vergleichs- und Optimierungsorgan aufweisen.

Eine weitere Berechnungseinrichtung ist vorgesehen, um mittels einer Tonwertzunahmekurve, welche in der Tonwertzunahmeberechnungseinrichtung bestimmt wurde, unter Zugrundelage des Modells Charakterisierungsdaten des Druckprozesses zu berechnen. Insbesondere kann die Berechnungseinrichtung hierfür Bestandteil der Berechnungseinrichtung zum Berechnen von Spektren sein.

Ein Beispiel des erfindungsgemäßen Verfahrens, aus welchem sich auch weitere erfindungsgemäße Merkmale ergeben können und auf welches die Erfindung nicht beschränkt ist, ist unter Bezugnahme auf ein erfindungsgemäßes Testelement, aus dem sich weitere erfindungsgemäße Merkmale ergeben können und auf welches das erfindungsgemäße Testelement nicht beschränkt sein soll, in den Figuren gezeigt. Es zeigen:

Figur 1    ein Testelement gemäß Stand der Technik,

Figur 2    ein erstes Testelement

Figur 3    ein reduziertes Testelement, und

Figur 4    eine Vorrichtung zur Ermittlung von Charakterisierungsdaten eines Druckprozesses.

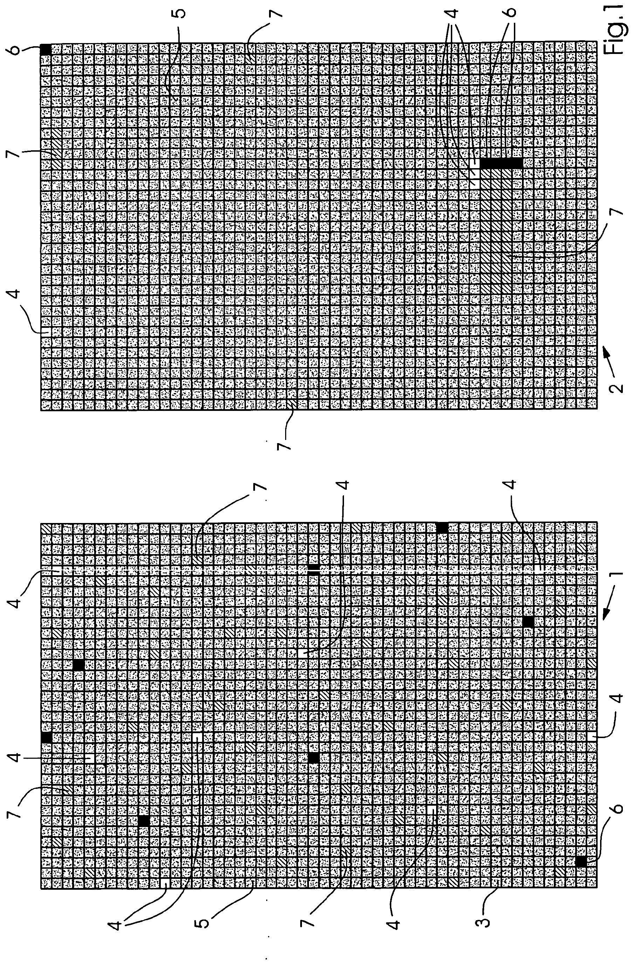

Die Figur 1 zeigt Testelemente 1, 2 nach dem Stand der Technik, welche zur Ermittlung von Charakterisierungsdaten beispielsweise entsprechend der ISO 12642-2:2006 verwendet werden. Es handelt sich hierbei um Testelemente für einen CMYK Druckprozess. Diese Testelemente können beispielsweise auch durch Hersteller spezifische Testelemente, welche insbesondere bei der Verwendung von Sonderfarben notwendig sind, ersetzt werden.

Die Testelemente 1, 2 sind aus Farbfeldern 3 aufgebaut, wobei insgesamt unterschieden werden muss, zwischen Farbfelder 4 ohne Deckung, d. h. weiße Farbfelder 4, Farbfelder 5 mit Mischanteilen, die durch das Übereinanderdrucken von verschiedenen Druckfarben erzeugt werden, Volltonfarbfeldern 6, welche durch eine 100%-Deckung aus jeweils einer einzigen Druckfarbe erzeugt werden, und Tonwertfarbfeldern 7, welche ausschließlich aus einer Druckfarbe erstellt werden, wobei der Tonwert, welcher der Deckung des Farbfeldes zugrundeliegt, der einzelnen Druckfarbe zwischen 0 und 100 % liegen kann.

Solche Testelemente 1, 2, wie sie in der Figur 1 gezeigt werden, sind im Allgemeinen so groß, dass dafür wenigstens eine Testform, d. h. eine Druckplatte, bebildert werden muss, welche dann in einem Druckverfahren verwendet wird, um hierbei die Charakterisierungsdaten dieses Druckprozesses ermitteln zu können. Hierbei ist insbesondere zu beachten, dass bei bekannten Farbmessgeräten, z. B. Spektralphotometern, die Messfeldblende beispielsweise einen Durchmesser von etwa 3 mm aufweist, so dass die minimale Feldgröße mindestens 5 x 5 mm$^2$ für eine sichere Messung betragen muss. Der Flächenbedarf für solch ein komplettes Testelement ist folglich sehr groß. Mit solchen bekannten Testelementen Charakterisierungsdaten aufzunehmen ist sehr umständlich, da bei der Verwendung von mehreren Testelementen teilweise die verwendeten Testelemente und Farbfelder auf mehrere Druckbogen verteilt werden müssen. Solch eine Verteilung gilt insbesondere, wenn mehr als vier Druckfarben und/oder Sonderfarben verwendet werden. Die hier gezeigten Testelemente weisen bei vier Farben 1617 Felder auf.

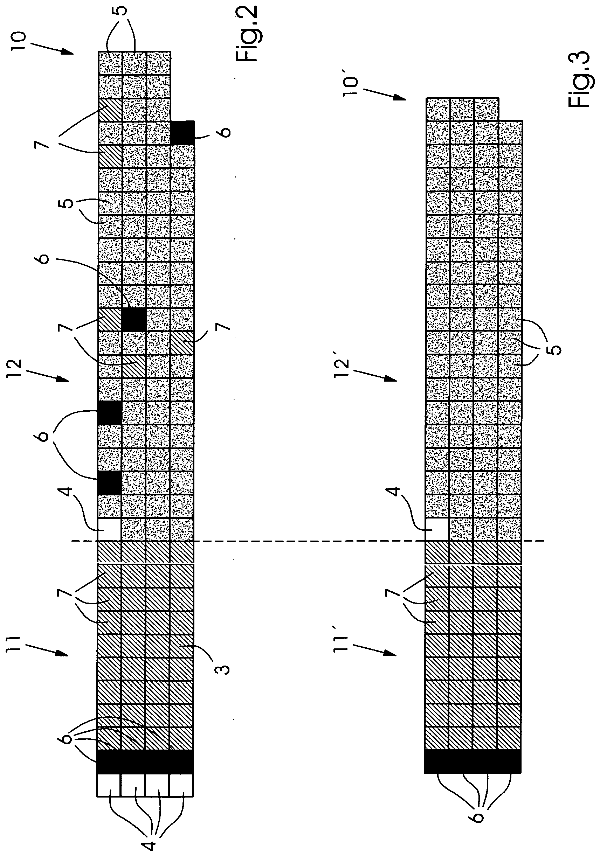

Gemäß des vorgestellten erfinderischen Verfahrens reicht nun ein erfindungsgemäßes Testelement wie es z. B. in Figur 2 oder 3 dargestellt ist zur Charakterisierung eines Druckprozesses aus.

In der Figur 2 ist ein erfindungsgemäßes erstes Beispiel eines Testelements 10 gezeigt. Es handelt sich hierbei um ein Beispiel für ein Vierfarbsystem mit den Farben CMYK.

Das Testelement 10 ist dabei in zwei Teilbereiche 11 und 12 aufgeteilt. Diesen Teilbereichen 11, 12 des Testelementes 10 sind jeweils Farbfelder 3 zugeordnet, wobei der Menge der Farbfelder 3 die einem Teilbereich 11, 12 zugeordnet sind jeweils eine eigene Teilmenge 54, 54 an später gemessenen Ist-Daten zugeordnet wird.

Der Teilbereich 11 umfasst Farbfelder 3, welchen einen Stufenkeil aufbauen. Die Farbfelder 3 sind dafür jeweils ausschließlich aus einer Druckfarbe (CMYK) mit unterschiedlichen Tonwerten aufgebaut. Liegt der Tonwert jeweils bei 0 % so werden vier weiße Farbfelder 4 gebildet. Bei einem Tonwert von 100 % ergeben sich die vier Volltonfarbfelder 6. Die übrigen Farbfelder 3 ergeben sich durch Variationen der Tonwerte mit jeweils einem 10%igen Abstand des Tonwertes, so dass sich hier insgesamt 36 Tonwertfarbfelder 7 ergeben.

Während der Teilbereich 11 aus 44 Farbfeldern in Form eines Stufenkeils aufgebaut ist, besteht der Teilbereich 12 insgesamt aus 81 Farbfeldern 3. Hier werden die Farbfelder 3 durch das Übereinanderdrucken der unterschiedlichen Druckfarben (CMYK) in allen möglichen Kombinationen gebildet. Die möglichen Kombinationen ergeben sich dabei aus der Anzahl der Stützstellen, in denen die Tonwerte der einzelnen Druckfarben (CMYK) vorgegeben werden. Im hier dargestellten Beispiel sollen als Stützstellen Farbwerte der Werte 0 %, 40 % und 100 % verwendet werden, so dass für jede Druckfarbe CMYK drei unterschiedliche Tonwerte zur Verfügung stehen. Die Anzahl der Kombinationen der übereinander gedruckten Druckfarben CMYK ergibt sich daher gemäß der Formel $k^m$, wobei k die Anzahl der Druckstellen und m die Anzahl der Druckfarben beschreibt, *zu 81.*

Auch bei den möglichen Kombinationen der übereinander gedruckten Druckfarben CMYK ergibt sich ein Feld mit einem weißen Farbfeld 4, insgesamt vier Volltonfarbfelder 6 mit einer Deckung von 100 % jeweils, mit nur einer Druckfarbe CMYK und vier weitere Tonwertfarbfetder 7 mit einer Deckung von 40 %, mit jeweils nur einer Druckfarbe CMYK. Die übrigen 72 Farbfelder 3 ergeben sich dann durch gemischte Farbfelder 5. Unter einem gemischten Farbfeld 5 ist ein Farbfeld 3 zu verstehen, welches mit wenigstens zwei unterschiedlichen Druckfarben CMYK gedruckt wurde.

Die Figur 3 zeigt eine alternative bevorzugte Version eines Testelementes 10', wobei hier in den Teilbereichen 11', 12'jeweils redundante Farbfelder 3 gestrichen wurden.

Da in beiden Teilbereichen 11, 12 des Testelementes 10 weiße Farbfelder 4 vorhanden waren, wurden im Testelement 10'die weißen Farbfelder 4 des Teilbereichs 11 gestrichen, so dass der reduzierte Teilbereich 11'nunmehr vier Volltonfarbfelder 6 und 36 Tonwertfarbfelder 7 aufweist. Im Teilbereich 12'wurde dagegen auf die vier Volltonfarbfelder 6, welche identisch zu den Volltonfarbfeldern 6 des Teilbereichs 11' sind, sowie auf die Tonwertfarbfelder 7, welche auch identisch zu Tonwertfarbfeldern 7 des Teilbereichs 11'waren, verzichtet, so dass hier nur noch eine Anzahl von 72 gemischten Farbfeldern 5 und einem weißen Farbfeld 4 Verwendung finden, mithin nur noch insgesamt 73 Farbfelder verwendet werden.

Das gesamte reduzierte Testelement 10' umfasst dann nur noch 113 Farbfelder 3 und dient dennoch als Ausgangspunkt zur Ermittlung der notwendigen Charakterisierungsdaten eines Vierfarbdruckprozesses. Durch die geringe Ausdehnung dieses reduzierten Testelementes 10' oder auch schon des Testelementes 10 selber ist es möglich, diese Testelemente 10, 10' beispielsweise sogar während eines Druckprozesses in einem nicht genutzten Randbereich des Druckbogens aufzubringen. Bevorzugt werden sie aber in einer dezidierten Testform verwendet. Während für einen Vierfarbdruck der Teilbereich 12 $k^m = 3^4 = 81$ Farbfelder 3 umfasst, würde ein entsprechender Teilbereich 12 eines Testelements 10 für sechs Druckfarben bei ebenfalls 3 Stützstellen $3^6 = 729$ Farbfelder 3 aufweisen.

Eine weitere Reduzierung der Farbfelder 3 kann insbesondere für eine Verwendung von mehr als vier Druckfarben durch eine Farbraumseparation, wie sie in der DE 10 2004 001 937 beschrieben ist, vorgenommen werden. Hierbei wird auch für einen Sechsfarbendruck der Farbraum entsprechend in Bereiche separiert, die ausschließlich drei Druckfarben aufweisen. Bezugnehmend auf die Beschreibung der DE 10 2004 001 937 für diese Aufspaltung des Farbraumes, d.h. die beschriebenen Separationen müssen dann für jeden dieser separierten Farbraumbereiche wieder nur $k^m$ mit m verwendeten Druckfarben im betrachteten Bereich und k der Anzahl der Stützstellen, d.h. der verwendeten Werte im Übereinanderdruck der unterschiedlichen Druckfarben entsprechend insgesamt dreimal $k^m = 3 \cdot 81 = 243$ Farbfelder 3 verwendet werden, wobei in jedem Teilbereich oder Segment des Farbraums ausschließlich drei Stützstellen verwendet werden und vier Druckfarben übereinander gedruckt werden. Ein Übereinanderdrucken von mehr als vier Druckfarben ist nicht vorgesehen.

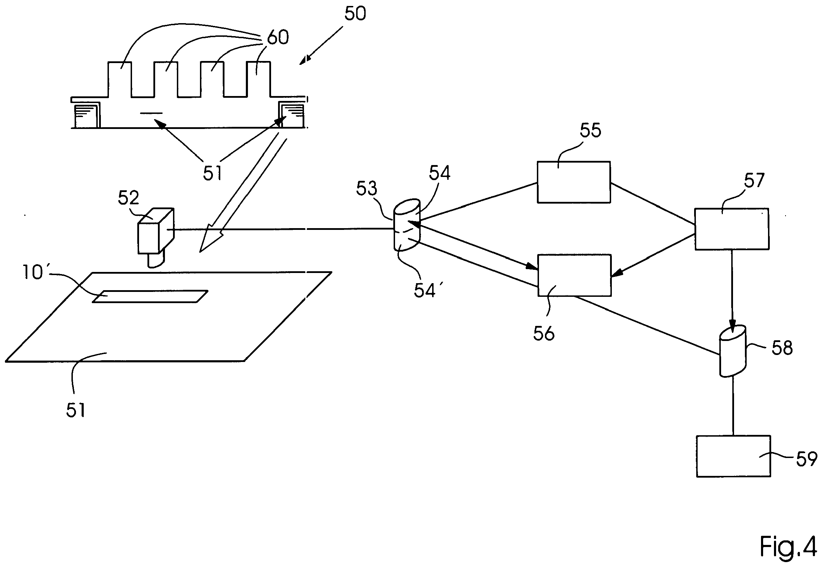

Ein wie oben beschriebenes Testelement 10, 10' kann in einem Druckprozess zur Ermittlung der Charakterisierungsarten einer Druckmaschine 50 selbständig auf eine Druckform belichtet und in der Druckmaschine 50 auf einen Druckbogen 51 aufgetragen werden. Alternativ ist es insbesondere auch möglich, aufgrund der Ausmaße der Testelemente 10, 10' diese in einem Randbereich eines Druckbogens 51 zu bedrucken. Fig. 4 zeigt einen entsprechenden Aufbau zur Erzeugung von Charakterisierungsdaten, bei dem ein Druckbogen 51 zunächst in einer Druckmaschine 50 mit mehreren Farbwerken 60 bedruckt wird, wobei in einem Randbereich des Druckbogens 51 ein reduziertes Testelement 10' vorgesehen ist. Bevorzugt soll immer darauf geachtet werden, dass das Testelement 10' in einem Bereich mit einer ausreichenden Farbversorgung bereitgestellt ist.

Nach dem durchgeführten Druckprozess wird der bedruckte Druckbogen 51 im Bereich des reduzierten Testelements 10' mittels eines Spektralphotometers 52 ausgemessen. Die so ermittelten Messergebnisse werden als spektrale Ist-Daten 54, 54' in einer Speichereinrichtung 53 abgespeichert. Die spektralen Ist-Daten bestehen dabei aus einer ersten Teilmenge 54 und einer zweiten Teilmenge 54', welche jeweils den Teilbereichen 11' und 12' des reduzierten Testelements 10' zugerechnet werden können, wobei die Farbfelder 3, die zur Reduzierung des Testelements 10 auf ein reduziertes Testelement 10' im jeweiligen Teilbereich 11, 12 weggelassen wurden, nun beiden Teilmengen 54, 54' zugeordnet werden. Dies kann insbesondere durch eine Verdoppelung der entsprechenden Daten erreicht werden.

Die erste Teilmenge 54 der gespeicherten spektralen Ist-Daten wird zu einer Tonwertzunahmeberechnungseinrichtung 55 weitergeleitet, wobei alternativ die Tonwertzunahmeberechnungseinrichtung 55 auch direkt auf die Teildatenmenge 54 zugreifen kann. Auf Grundlage dieser spektralen Daten werden nach bekannten Verfahren densitometrische, farbmetrische oder spektrale Tonwerte und/oder Tonwertzunahmen, insbesondere aus den Farbkeilen des Teilbereichs 11' des reduzierten Testelements 10' gewonnen, wobei insbesondere weiter auf das Weissfeld 4 aus dem Teilbereich 12' des reduzierten Teilelements 10' zurückgegriffen wird.

Aus den so ermittelten Tonwertzunahmen für die einzelnen Druckfarben CMYK gemäß der Farbkeile des Teilbereichs 11' oder alternativ eines Teilbereichs 11, werden durch geeignete Interpolationsverfahren entsprechende Tonwertzunahmekorrekturkurven für die einzelnen Druckfarben CMYK ermittelt. Allgemein können durch diese Farbkeile 11' Tonwertzunahmekorrekturkurven, Tonwertekorrekturkurven für alle verwendeten Druckfarben, d.h. auch von Mehrfarbdrucksystemen, insbesondere auch für Sonderfarben, ermittelt werden. Bei der Verwendung von Sonderfarben wird bevorzugt die spektrale Tonwertzunahme aus der ersten Teilmenge der gespeicherten spektralen Daten 54 berechnet. Durch die Verwendung von spektralen Tonwertzunahmen kann allgemein für alle Farben die Genauigkeit erhöht werden.

Weiter greift eine spektrale Berechnungseinrichtung 56 auf die zweite Teilmenge 54' der gespeicherten Ist-Daten im Speicher 53 zu. Durch Verwendung dieser zweiten Teilmenge 54', welche im wesentlichen dem reduzierten Teilbereich 12' des Testelements 10' entspricht und unter Berücksichtigung von spektralen Daten von Farbfeldern 3, die zur Reduzierung des Testelements 10' nicht mehr im Teilbereich 12', stattdessen ausschließlich im Teilbereich 11' verwendet werden, die nun zur ersten Teildatenmenge 54 gehören, können mittels eines in der spektralen Berechnungseinrichtung 56 hinterlegten Modells Spektren für alle möglichen Übereinanderdrucke der verschiedenen Druckfarben berechnet werden.

Bevorzugt wird als Modell zur Berechnung der Spektren der unterschiedlichen Übereinanderdrucke von Druckfarben das sogenannte segmentierte spektrale Yule-Nielsen-Neugebauer-Modell verwendet (englisch: CYNSN Cellular Yule-Nielsen modified spectral Neugebauer model). Auch andere Modelle zur Berechnung von Spektren aus der Vorgabe von gemessenen Stützpunkten können verwendet werden.

Gemäß der segmentierten spektralen Yule-Nielsen Neugebauer-Gleichung berechnet sich das Spektrum für eine Kombination von Druckfarben in einem Segment eines Körpers, welcher durch die verwendeten Druckfarben aufgespannt wird gemäß der folgenden Gleichung:

$$R(\lambda) = \left[ \sum_{i=1}^{NP} \alpha_i \times R_i^{1/n}(\lambda) \right]^n \qquad (1)$$

Im Übrigen werden die verwendeten Stützstellen $R_i$, welche die Eckpunkte der einzelnen Segmente des Körpers der Druckfarben sind, durch die vorgegebenen prozentualen Werte der Druckfarben im Teilbereich 12 bzw. 12' des Testelements 10, 10' definiert. Im verwendeten Beispiel sind somit drei Stützstellen 0 %, 40 % und 100 % definiert. Die Stützstellen $R_i$ entsprechen den spektralen Ist-Daten der Farbfelder 3 an diesen Punkten. Allgemein wird bei der Verwendung von m Druckfarben im Druckprozess ein m-dimensionaler Körper durch die verwendeten Druckfarben aufgespannt, wobei die Achsen des Körpers jeweils aus den spektralen Werten gebildet werden, die den Tonwerten nur einer Druckfarbe entsprechen. Durch die Segmentierung dieses Körpers ergeben sich wiederum Körper, die durch die gewählten Stützstellen innerhalb des Körpers der Druckfarben definiert sind.

Beim üblichen Neugebauer-Modell werden als Stützstellen das Papierweiss und die Volltonfarbfelder verwendet. Im Druck werden zur Charakterisierung dann entsprechend zusätzlich alle Kombinationen der Übereinanderdrucke erstellt. Bei einem Druck mit drei Farben wären dies $2^3 = 8$ Kombinationen, bei einem Druck mit vier Farben $2^4 = 16$ Kombinationen. Allgemein ergibt sich die Anzahl der Kombinationen aus der Anzahl der Stützpunkte pro Farbkomponente potenziert mit der Anzahl der Farbkomponenten zu $NP = k^m$.

Die Einführung eines weiteren Stützpunktes (k = 3) wie im vorgestellten segmentierten spektralen Yule-Nielsen-Neugebauer-Modell führt dann beim Druck mit vier Farben wie erwähnt zu 81 Kombinationen. Anzahl und Verteilung der Stützpunkte für jede Farbkomponente sollte so gewählt werden, dass eine visuell möglichst gleichmäßige Abdeckung erfolgt. Dieses ist durch die vorgeschlagenen Stützpunkte 0 %, 40 % und 100 % gegeben, was sich durch empirische Betrachtung gezeigt hat, wobei auch mit 50% statt 40% sehr gute Ergebnisse erzielt werden.

In Abhängigkeit von den verwendeten Druckfarben, d.h. von ihrer Anzahl und der Anzahl der Stützpunkte, ergibt sich die Anzahl der Segmente oder Zellen des segmentierten Modells zu $Z = (k - 1)^m$, wobei jede Zelle wieder $NP = 2^m$ Stützpunkte hat. Für jedes dieser Segmente gilt dann das einfache spektrale Yule-Nielsen-Neugebauer-Modell und somit die Gleichung (1), wobei sich der Index i auf die Eckwerte eines Segmentes bezieht. Die Anzahl der Eckwerte des Segments NP ergibt sich nach $NP = 2^m$ mit m als Anzahl der Druckfarben. Die Stützstellen werden also durch das Übereinanderdrucken zweier möglicher Druckfarben definiert.

Die Werte $\alpha_i$ sind die sogenannten Demichel-Koeffizienten. Sie ergeben sich beispielsweise bei der Verwendung von drei Druckfarben, z.B. CMY nach den Gleichungen

$$\alpha_1(CMY) = (1-c_I)(1-m_I)(1-y_I)$$
$$\alpha_2(CMY) = (\ c_I)(1-m_I)(1-y_I)$$
$$\alpha_3(CMY) = (1-c_I)(\ m_I)(1-y_I)$$
$$\alpha_4(CMY) = (\ c_I)(\ m_I)(1-y_I)$$
$$\alpha_5(CMY) = (1-c_I)(1-m_I)(\ y_I)$$
$$\alpha_6(CMY) = (\ c_I)(1-m_I)(\ y_I)$$
$$\alpha_7(CMY) = (1-c_I)(\ m_I)(\ y_I)$$
$$\alpha_8(CMY) = (\ c_I)(\ m_I)(\ y_I) \qquad (2)$$

Die effektiven Flächendeckungen $c_I$, $m_I$ und $y_I$ der Halbtöne müssen für die Berechnung normalisiert werden:

$$c_I = (C - 0) / (\ Cs - 0) \qquad \text{für } C < Cs$$
$$= (C - Cs) / (100 - Cs) \qquad \text{für } C \geq Cs$$
$$m_I = (M - 0) / (\ Ms - 0) \qquad \text{für } M < Ms$$
$$= (M - Ms) / (100 - Ms) \qquad \text{für } M \geq Ms$$
$$y_I = (Y - 0) / (\ Ys - 0) \qquad \text{für } Y < Ys$$
$$= (Y - Ys) / (100 - Ys) \qquad \text{für } Y \geq Ys \qquad (3)$$

Mit Cs, Ms, Ys den Tonwerten der Segmentteilung.

Der Übersicht halber wurde sich hier auf drei Druckfarben beschränkt. Bei der Verwendung von vier oder mehr Druckfarben, beispielsweise zusätzlich der Verwendung der Druckfarbe K wie im obigen Beispiel, kommen die Faktoren $k_I$ und $(1 - k_I)$ entsprechend hinzu, sodass bei 16 Stützstellen $R_i$ insgesamt 16 Demichels-Koeffizienten $\alpha_i$ vorgesehen sind.

Die effektiven Flächendeckungen $c_I$, $m_I$ und $y_I$ der Halbtöne beschreiben die relative Flächendeckung eines Druckpunktes, welcher innerhalb eines entsprechenden Segments liegen würden. Wobei mittels der Gleichung (1) auf Grundlage der gemessenen Spektren $R_i$ der k Stützstellen die an den Farbfeldern 4, 5, 6 und 7 des Teilbereichs 12 oder 12' eines Testelements 10 oder 10' ermittelt wurden nun die Spektren beliebiger Tonwertekombinationen innerhalb eines Segments berechnet werden können.

Mittels dieser Vorgaben, die sich wie beschrieben leicht auf vier und mehr Farben erweitern lassen, können dann die spektralen Werte $R(\lambda)$ für alle Druckfarbenkombinationen innerhalb eines Segmentes berechnet werden. Mit dem Faktor n gemäß Formel (1) soll dabei einer optischen Bildpunktverbreiterung Rechnung getragen.

Gemäß dem hier vorgestellten Beispiel wird der Faktor n durch die Berechnung der Spektren der Tonwertfarbfelder 7 der Teilbereiche 11, 11' und/oder 12, 12' nach dem segmentierten spektralen Yule-Nielsen-Neugebauer-Modell bestimmt. Werden weitere Farbkeile oder Testelemente auf der gleichen Testform oder Druckform verwendet, so können zusätzlich oder alternativ auch Farbfelder von diesen Testelementen zur Bestimmung des Faktors n herangezogen werden.

Hierfür wird zunächst ein willkürlicher Wert für n eingesetzt, wobei als Startpunkt der Wert n = 2 bevorzugt wird. Durch iteratives Ändern des Faktors bzw. Parameters n wird der Faktor n so angepasst, dass sich die Differenzen zwischen den berechneten Spektren $R(\lambda)$ und den gemessenen Spektren der Farbfelder 7 bzw. aller Farbfelder 3 des Teilbereichs 11, 11' und/oder 12, 12' minimieren. n kann dabei insgesamt über alle Farbfelder 3 eines Teilbereichs oder für die einzelnen Farben des Teilbereichs 11, 11' minimiert werden, hier kann dann eine Mittelwertbildung vorgenommen werden.

Da es sich bei dem so ermittelten Faktor n immer noch um ein Modell handelt, können durch dieses so beschriebene Verfahren noch nicht alle Farbfelder 3 von Testelementen 1, 2 zur Charakterisierung eines Druckprozesses hinreichend genau berechnet werden.

Durch die zusätzliche Berücksichtigung der Tonwertzunahmen oder Tonwerten bzw. einer Tonwertzunahmekurve, wie sie sich aus den Farbfeldern 3 der Teilbereiche 11, 11' ergibt, kann die segmentierte spektrale Yule-Nielsen-Neugebauer-Gleichung nach Gleichung (1) soweit angepasst werden, dass alle Farbfelder 3 von Testelementen 1, 2 zur Charakterisierung eines Druckprozesses mit hinreichender Genauigkeit berechnet werden können, d.h. die im Modell verwendete spektrale Yule-Nielsen-Neugebauer-Gleichung kann gemeinsam unter Berücksichtigung der Tonwertzunahmekurvenkorrektur nach den Farbfeldern 3 der Teilbereiche 11, 11' alleine zur Berechnung aller notwendigen Charakterisierungsdaten eines Druckprozesses herangezogen werden, so dass die kleinen Testelemente 10, 10' ausreichend zur Charakterisierung des Druckprozesses sind. Diese können dann gemeinsam mit noch weiteren Testelementen für weitere Bestimmungen entsprechend auf einer Testform vorbereitet werden. Die kleinen Testelemente 10, 10' können also vorteilhafterweise die großen Testelemente 1,2 vollständig ersetzen ohne Genauigkeit zu opfern.

Die Tonwertzunahmekorrekturkurve nach den Teilbereichen 11, 11' wird wie beschrieben in der Tonwertzunahmeberechnungseinrichtung 55 ermittelt. Für vorgegebene Tonwertekombinationen der Druckfarben, z.B. CMYK, beispielsweise für Farbfelder eines Testelementes 1,2 werden gemäß der Erfindung nunmehr nicht diese Tonwerte direkt in die Yule-Nielsen-Neugebauer-Gleichung als Bestandteil der Demichel-Koeffizienten gemäß Gleichung 2 und 3 eingesetzt, sondern diese Tonwerte CMYK werden zunächst gemäß der festgestellten und berechneten Tonwertzunahmekurve korrigiert. Dieses geschieht in einer Tonwertzunahmekorrektureinrichtung 57, welche die so korrigierten Tonwerte C'M'Y'K' als Eingangsgrößen für die effektiven Flächendeckungen $c_l$, $m_l$, $y_l$ und $k_l$ der Demichel-Koeffizienten der Yule-Nielsen-Neugebauer-Gleichung an die Berechnungseinrichtung 56 übergibt. Erst auf Grundlage dieser tonwertzunahmekorrigierten Tonwerte C'M'Y'K' werden dann durch die Berechnungseinrichtung 56 nach dem oben geschildertem Modell die Spektren der vorgegebenen Druckfarbenkombinationen ermittelt. Die so berechneten Spektren $R(\lambda)$ für Tonwertekombination $C_b M_b Y_b K_b$ werden dann gemeinsam mit den vorgegebenen Tonwertekombination CMYK als Charakterisierungsdaten in einer Speichereinrichtung 58 zur Verfügung gestellt. Mittels dieser Charakterisierungsdaten können dann anschließend in einer Berechnungseinrichtung 59 Profilierungen eines Druckprozesses durchgeführt, Prozesskalibrierungen oder Prozesskontrollen angewandt werden.

Wie bereits beschrieben, ist dieses Verfahren mit einer entsprechenden Anpassung von Demmichel-Koeffizienten und Stützpunkten $R_i$ leicht auch auf Mehrfarbsystem, insbesondere mit Sonderfarben, erweiterbar.

Somit wird auf einfache Weise durch die Verwendung von Tonwertzunahmekorrekturkurven in einer Tonwertzunahmeberechnungseinrichtung 55 für die Verwendung von vorgegebenen Farbwerten unterschiedlicher Druckfarben in ein spektrales Modell des Druckprozesses, hier das segmentierte spektrale Yule-Nielsen-Neugebauer-Modell, die benötigte Anzahl von Farbfeldern 3 eines Testelements 10, 10' sehr stark verringert und vereinfacht, da sich experimentell herausgestellt hat, dass durch diese Wechselwirkung mit der zusätzlichen Tonwertzunahmekorrekturkurve, insbesondere alle spektralen Werte der Farbfelder 3 von Testelementen 1, 2 gemäß dem Stand der Technik hinreichend genau genug berechnen lassen und somit sich auch alle dazwischen liegenden Tonwertkombinationen entsprechend genau bestimmen lassen. Somit genügen diese Daten vollständig zur Charakterisierung eines Druckprozesses. Statt der Verwendung von Tonwertzunahmekorrekturkurven ist es natürlich auch möglich sowohl die vorgegeben Tonwerte, als auch die aus den ermittelten Farbwerten ermittelten Tonwerte einer entsprechenden Berechnung zu Grunde zu legen.

**Bezugszeichenliste**

| | |
|---|---|
| 1,2 | Testelement |
| 3 | Farbfelder |
| 4 | weiße Farbfelder |
| 5 | gemischte Farbfelder |
| 6 | Volltonfarbfelder |
| 7 | Tonwertfarbfelder |

| | |
|---|---|
| 11,12 | 10 Testelement Teilbereiche |
| 11', 12' | " |
| 10' | Reduziertes Testelement |

| | |
|---|---|
| 50 | Druckmaschine |
| 51 | Druckbogen |
| 52 | Spektralphotometer |
| 53, 58 | Speichereinrichtung |
| 54, 54' | Teilmengen gespeicherter Daten |

| 55 | Tonwertzunahmeberechnungseinrichtung |
| 56 | spektrale Berechnungseinrichtung |
| 57 | Tonwertzunahmekorrektureinrichtung |
| 59 | Berechnungseinrichtung |
| 60 | Farbwerk |

**Patentansprüche**

1. Verfahren zur Bestimmung von Charakterisierungsdaten zur Verwendung in einem Druckprozess, wobei zunächst wenigstens ein Testelement (10, 10') mit einer Anzahl von Farbfeldern (3) auf einen Bedruckstoff gedruckt wird, den Farbfeldern (3) Tonwerte von wenigstens einer Druckfarbe zugeordnet sind, die Farbfelder des wenigstens einen Testelements (10, 10') mit einem spektralen Messgerät (52) zur Ermittlung von Messergebnissen vermessen werden, und die Messergebnisse als spektrale Ist-Daten abgespeichert werden, auf Basis einer ersten Teilmenge (54) der Ist-Daten eine erste Tonwertzunahme für die zugeordneten Tonwerte der Farbfelder (3) der ersten Teilmenge bestimmt wird, aus den ersten Tonwertzunahmen der zugeordneten Tonwerte eine erste Tonwertzunahmekurve oder Tonwertekurve durch Interpolation ermittelt wird, eine zweite Teilmenge(54') der Ist-Daten zur Bestimmung wenigstens eines Parameters eines Modells zur Berechnung von Farbwerten des Druckprozesses herangezogen wird, **dadurch gekennzeichnet, dass** aus dem Modell eine zweite Tonwerte- und/oder Tonwertzunahmekurve für den Druckprozess ermittelt wird, die ersten und zweiten Tonwerte- bzw. Tonwertzunahmekurven miteinander verglichen werden, aus der ersten Tonwerte- oder Tonwertezunahmekurve eine Korrekturkurve zur Anpassung der Tonwerte des Modells ermittelt wird, und das Modell unter Berücksichtigung der Korrekturkurve zur Berechnung von Charakterisierungsdaten des Druckprozesses verwendet wird.

2. Verfahren nach Anspruch 1,
   **dadurch gekennzeichnet, dass**
   als Modell das spektrale Yule-Nielsen Neugebauer-Modell, vorzugsweise das segmentierte spektrale Yule-Nielsen Neugebauer-Modell verwendet wird und mittels wenigstens einer Teilmenge (54, 54') ein Faktor n zur Modellierung der Punktverbreiterung iterativ bestimmt wird.

3. Verfahren nach Anspruch 1 oder 2,
   **dadurch gekennzeichnet, dass**
   aus der ersten Teilmenge (54) densitometrische, farbmetrische oder spektrale erste Tonwerte bzw. Tonwertzunahmen berechnet werden, wobei bei Verwendung von Sonderfarben, zumindest bei Farbwerten, der Farbfelder (3), welche Sonderfarben aufweisen bevorzugt spektrale Tonwerte, bzw. Tonwertzunahmen berechnet werden.

4. Verfahren nach Anspruch 1,
   **dadurch gekennzeichnet, dass**
   es sich bei der ersten Teilmenge (54) um Daten von Farbkeilen (11, 11') handelt, welche vorzugsweise aus Farbfelder (3) bestehen, die ausschließlich durch eine Druckfarbe (CMYK) gebildet und bevorzugt auf Tonwerten mit Abständen von 10% basieren.

5. Verfahren nach Anspruch 1,
   **dadurch gekennzeichnet, dass**
   es sich bei der zweiten Teilmenge (54') um Daten von Farbfeldern (3) handelt, die durch das Übereinanderdrucken von verwendeten Druckfarben (CMYK) gebildet werden, wobei mit m Druckfarben (CMYK) gedruckt wird, die Druckfarben (CMYK) gemäß Tonwerten gedruckt werden, die aus einer vorgegebenen Stützstellenauswahl von k Stützstellen ausgewählt werden, und die Druckfarben (CMYK) gemäß jeder möglichen Kombination der Stützstellen übereinander gedruckt werden, sodass $k^m$ Kombinationen von übereinander gedruckten Druckfarbendeckungen möglich sind, wobei insbesondere die Stützstellen 0%, 40% und 100% bevorzugt zur Auswahl gestellt werden.

6. Verfahren nach den Ansprüchen 4 und 5,
   **dadurch gekennzeichnet, dass**

das wenigstens eine Testelement (10') Farbfelder (3) in Farbkeilen (11') zur Bestimmung der Daten der ersten Teilmenge (54) und Farbfelder (3) zur Bestimmung der Daten der Daten der zweiten Teilmenge (54') aufweist,

die Menge der Farbfelder (3) zur Bestimmung der ersten oder zweiten Teilmenge (54, 54') um Farbfelder (4, 6, 7) reduziert wird, die bereits zur Bestimmung der zweiten oder ersten Teilmenge (54', 54) verwendet wird,

diese Farbfelder (4, 6, 7) nur in einem Teilbereich (11', 12') des Testelements (10') gedruckt werden und zur Bestimmung beider Teilmengen (54, 54') verwendet werden, oder

Farbfelder (4, 6, 7) zur Bestimmung der ersten oder zweiten Teilmenge, (54, 54') denen die gleichen Tonwerte zu Grunde liegen sowohl zur Bestimmung der ersten, als auch der zweiten Teilmenge (54, 54') herangezogen werden, wobei insbesondere eine Mittelwertbildung für mehrfach gedruckte Farbfelder erfolgt (4, 6, 7).

7. Verfahren nach Anspruch 1,
**dadurch gekenntzeichnet,** dass
die Charakterisierungsdaten gespeichert werden,
wenigstens unter Verwendung der Charakterisierungsdaten ein Farbprofil des Druckprozesses erstellt wird, und
das Farbprofil zur Farbsteuerung einer Druckmaschine des Druckprozesses verwendet wird.

## Claims

1. Method for determining characterization data for use in a printing process,
wherein initially at least one test element (10, 10') including a number of colour fields (3) is printed onto a printing material,
wherein tone values of at least one process colour are associated with the colour fields (3),
wherein the colour fields of the at least one test element are measured using a spectral measuring device (52) to establish measurements,
wherein the measurements are saved as actual spectral data,
wherein based on a first subset (54) of the actual data, a first dot gain for the associated tone values of the colour fields (3) of the first subset is established,
wherein, based on the first dot gains of the associated tone values, a first dot gain curve or tone value curve is determined by interpolation,
wherein a second subset (54') of the actual data is used to determine at least one parameter of a model for calculating colour values of the printing process,
**characterized in**
**that** a second tone value curve and/or dot gain curve is determined from the model for the printing process,
**that** the first and second tone value curve or dot gain curves are compared to one another,
**that** a correction curve for adapting the tone values of the model is determined from the first tone value curve or dot gain curve, and
**that**, taking into consideration the correction curve, the model is used to calculate characterization data of the printing process.

2. Method according to claim 1,
**characterized in**
**that** the model that is used is the spectral Yule-Nielsen Neugebauer model, preferably the segmented spectral Yule-Nielsen Neugebauer model, and that a factor n for modelling the dot widening is determined iteratively by means of at least one subset (54, 54').

3. Method according to claim 1 or 2,
**characterized in**
**that** densitometric, colorimetric or spectral first tone values or dot gains are calculated from the first subset (54), wherein, when spot colours are used, spectral tone values or dot gains are preferably calculated, at least for colour values of colour fields (3) that include spot colours.

4. Method according to claim 1,
**characterized in**
**that** the first subset (54) consists of data of colour wedges (11, 11') that preferably consist of colour fields (3) that are exclusively formed by a process colour (CMYK) and are preferably based on tone values of 10% difference.

5. Method according to claim 1,

**characterized in**

**that** the second subset (54') consists of data of colour fields (3) that are created by printing used process colours (CMYK) on top of one another,

wherein m process colours (CMYK) are used in the printing process,

wherein the process colours (CMYK) are printed in accordance with tone values that are selected from a predetermined supporting point selection of k supporting points, and

wherein the process colours (CMYK) are printed on top of one another in accordance with every possible combination of the supporting points,

so that $k^m$ combinations of process colours printed on top of one another are possible,

wherein in particular the supporting points of 0%, 40% and 100% are preferably presented for selection.

6. Method according to claims 4 and 5,
   **characterized in**
   **that** at least one test element (10') includes colour fields (3) in colour wedges (11') for determining the data of the first subset (54) and colour fields (3) for determining the data of the second subset (54'),
   **that** the set of the colour fields (3) for determining the first or second subset (54, 54') is reduced by colour fields (4, 6, 7) that are already used to determine the second or first subset (54', 54),
   **that** these colour fields (4, 6, 7) are only printed in a subarea (11', 12') of the test element (10') and are used to determine both subsets (54, 54'), or
   **that** colour fields (4, 6, 7) that are based on the same tone values are used to determine both the first subset and the second subset (54, 54') are used to determine the first or second subset (54, 54') and,
   wherein averages are in particular calculated for colour fields that are printed multiple times (4, 6, 7).

7. Method according to claim 1,
   **characterized in**
   **that** the characterization data are saved,
   **that** a colour profile of the printing process is created at least using the characterization data, and
   **that** the colour profile is used for colour control purpose in a printing machine of the printing process.

**Revendications**

1. Procédé pour la détermination de données de caractérisation destinées à être utilisées dans un processus d'impression,
   en premier lieu au moins un élément test (10, 10') avec un nombre de champs d'encre (3) sont imprimés sur un matériau imprimé,
   les champs d'encre (3) étant associés à des valeurs tonales d'au moins une encre d'impression, les champs d'encre d'au moins un élément test (10, 10') étant mesurés avec un appareil de mesure spectral (52) et les résultats de mesure étant stockés en tant que données spectrales réelles,
   une première augmentation de valeur tonale étant déterminée, sur la base d'une première quantité partielle (54) des valeurs réelles, pour les valeurs tonales associées des champs d'encre (3) de la première quantité partielle, à partir des premières augmentations des valeurs tonales associées, une courbe d'augmentation de valeurs tonales ou courbe de valeurs tonales étant déterminée par interpolation,
   une seconde quantité partielle (54') des données réelles étant utilisées pour déterminer au moins un paramètre d'un modèle de calcul de valeurs d'encre du processus d'impression,
   **caractérisé en ce**
   **qu'**une seconde courbe d'augmentation de valeurs tonales et/ou courbe de valeurs tonales est déterminée à partir d'un modèle pour le processus d'impression,
   les première et seconde courbes d'augmentation de valeurs tonales ou courbe de valeurs tonales sont comparées entre elles,
   une courbe de correction pour l'adaptation des valeurs tonales du modèle est déterminée à partir de la première courbe d'augmentation de valeurs tonales ou courbe de valeurs tonales et le modèle est utilisé pour le calcul de données de caractérisation du processus d'impression en tenant compte de la courbe de correction.

2. Procédé selon la revendication 1,
   **caractérisé en ce**
   **qu'**en tant que modèle, il est utilisé le modèle spectral de Neugebauer modifié par Yule-Nielsen, de préférence le modèle spectral de Neugebauer modifié par Yule-Nielsen et un facteur n étant déterminé de manière itérative pour la modélisation au moyen d'au moins une quantité partielle (54, 54').

3. Procédé selon la revendication 1 ou 2,
**caractérisé en ce**
**que** des premières valeurs tonales respectivement des augmentations de valeurs tonales densitométriques, colorimétriques, ou spectrales sont calculées à partir de la première quantité partielle (54), à l'utilisation d'encres spéciales, au moins des valeurs d'encres des champs d'encre, (3) qui présentent des encres spéciales, on calcule de préférence des valeurs tonales spectrales respectivement des augmentations de valeurs spectrales.

4. Procédé selon la revendication 1,
**caractérisé en ce**
**que** les données de la première quantité partielle (54) sont des échantillons d'encre (11, 11') qui se composent de préférence de champs d'encre (3), exclusivement formés par une encre couleur d'impression (CMYK) et basés de préférence sur des valeurs tonales avec des intervalles de 10 %.

5. Procédé selon la revendication 1,
**caractérisé en ce**
**que** les données de la seconde quantité partielle (54') sont des données de champs d'encre (3) qui sont formés par la superposition des encres de couleur utilisées (CMYK), l'impression s'effectuant avec m encres d'impression, les encres d'impression (CMYK) étant superposées conformément à chaque combinaison possible des points nodaux,
de sorte que des combinaisons $k^m$ de couvertures d'encre superposées les unes sur les autres sont possibles, les points nodaux 0 %, 40 % et 100 % étant de préférence sélectionnés.

6. Procédé selon l'une des revendications 4 et 5,
**caractérisé en ce**
**qu'**au moins un élément test (10') présente des champs d'encre (3) dans des échantillons d'encre (11') pour la détermination des données de la première quantité partielle (54) et des champs d'encre (3) pour la détermination des données de la seconde quantité partielle (54'),
la quantité des champs d'encre (3) étant réduites, pour la détermination de la première ou de la seconde quantité partielle (54, 54'), de champs d'encre (4, 6, 7) qui ont déjà été utilisés pour la seconde ou la première quantité partielle (54, 54'),
ces champs d'encre (4, 6, 7) n'étant imprimés que dans une zone partielle (11', 12') de l'élément test (10') et utilisés pour la détermination des deux quantités partielles (54, 54'), ou
des champs d'encre (4, 6, 7) étant utilisés pour la détermination de la première ou seconde quantité partielle (54, 54') ayant les mêmes valeurs tonales de base, aussi bien pour la détermination de la première que de la seconde quantité partielle (54, 54'), la formation d'une valeur moyenne étant effectuée pour des champs d'encre imprimés (4, 6, 7) plusieurs fois.

7. Procédé selon la revendication 1,
**caractérisé en ce**
**que** les données de caractérisation sont stockées,
**qu'**au moins un profil d'encrage du processus d'impression est établi en utilisant les données de caractérisation et le profil d'encrage est utilisé pour commander la gestion des encres d'une machine d'impression du processus d'impression.

Fig.1

EP 2 362 633 B1

Fig.2

Fig.3

16

Fig.4

EP 2 362 633 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004001937 A1
- WO 2005013188 A1

- DE 102004001937